# EUROPEAN PATENT APPLICATION

(11) **EP 4 835 884 A1**
(43) Date of publication of application: **04.11.2026**
(21) Application number: 26172831.5
(22) Date of filing: 16.04.2026
(51) Int. Cl.: G10L 15/26, G06F 21/62, G10L 17/00, G10L 21/0208, G10L 21/0272

(54) **PRIVACY PRESERVING AUDIO CAPTURE**

(30) Priority: 29.04.2025 US 202519193860
(71) Applicant: Microsoft Technology Licensing, LLC, Redmond, WA 98052 (US)
(72) Inventor: NATTAR RANGANATHAN, Vaishnavi, Redmond, 98052 (US); COX, LANDON PRENTICE, Redmond, 98052 (US); MUTHABATULLA, Kiran, Redmond, 98052 (US); NIGHTINGALE, Edmund Bernard, Redmond, 98052 (US)
(74) Representative: CMS Cameron McKenna Nabarro Olswang LLP

(57) **Abstract**

This disclosure presents a technique for privacy preserving capture of audio or other modality from an environment during a conversation that only records the voice of a user of an audio capture device. Raw audio captured from the environment is diarized into separate voice streams for each voice. The voice stream of the user of the audio capture device is identified. The raw audio and voice streams of conversation participants other than the user are discarded. A transcript is generated from the voice stream of the user. The transcript may be used for training a personalized artificial intelligence (AI) assistant or generating derived content. If permission is granted, voice streams of other participants or transcripts of their portions of conversation may be used to provide fuller context.

## Description

### BACKGROUND

Personalized computing, such as a personal artificial intelligence (AI) assistants, provide better personalization the more they know about the user. Many personalized computing systems become personalized or customized through explicit training and active user configuration of the system. However, these types of manual customizations can be time consuming and users may only have the patience to provide a relatively small amount of training data. This may result in personalized computing systems with only minimal personalization. The personalized computing systems may use private user information, but concerns about user privacy are minimized when a user affirmatively provides training data.

Many users today create large amounts of data that could be ingested and used to customize a personalized computing system. Many types of data can be captured passively without the need for a user to manually take any action beyond authorizing access to the data. For example, photographs and videos, audio recordings, web browsing history, emails, calendars, productivity documents, health information, and the like could all be used to train an AI assistant or other type of personalized computing system. Users may be willing to explicitly authorize access to their own data to use in personalizing a computer system to have the benefit of a personalized system without the effort of manually training. However, even if a user is comfortable providing this data, there are privacy concerns associated with data that involves other people. For example, photographs may include images of other people, audio recordings may contain the voices of others, and emails may have replies written by people other than the user.

For those users that choose to opt into this use of their data, it would be desirable to have a way to create a large corpus of their personal data for training a personalized computing system without including data about other people. This disclosure is made with respect to these and other considerations.

### SUMMARY

This disclosure provides privacy preserving techniques for capturing personal data of a user to train an AI personal assistant or other types of personalized computer systems without using or saving personal data of other individuals. One type of data that can be captured is audio data. An audio capture device (e.g., smart phone) of a user could persistently record the audio of the surrounding environment. However, this could also capture the voices of people besides the user. To preserve the privacy of people who have not affirmatively agreed to the recording, the system of this disclosure uses audio processing techniques to isolate the voices of different speakers and save only the recording of the user. Thus, a smart phone may be in an "always on" recording mode but limited so that it cannot record any voices other than the user of that phone.

A transcript is created from the recording of the user. The transcript includes text representing the spoken words uttered by the user. It may provide an incomplete record of a conversation because it only includes the text of one of the speakers. However, this limitation protects the privacy of other people that participated in a conversation with the user. The audio capture device may also save metadata that does not raise privacy concerns such as time, location, and number of unique voices in a conversation. The transcript, and any associated metadata, can then be used to improve personalized computing for the user. The audio of only the voice of the user-his or her voice stream-may also be saved and used for such things as later generation of a transcript, annotation of a transcript with tone, and to improve personalized computing.

The transcript, and metadata, can be used to train an AI personal assistant for the user or for creating derived content a summary, a task list, and the like. This provides a rich corpus of data-all words spoken by the user and recorded by the audio capture device-for use in personalized computing without compromise the privacy of other individuals. Although most examples in this disclosure relate to audio, the techniques disclosed herein are not limited to only that type of data. The same principles can be applied to other types of data such as pictures, video, text, etc. that may include content from individuals other than the user. Thus, in general, raw data is initially captured, data associated with different individuals is identified (e.g., recognizing the face of the user versus the face of a different person in an image), data from other individuals is deleted, and the remaining data which is only that of the user is used for downstream training or other tasks.

Limiting the data to only that of the user is effective at preserving the privacy of others but provides only a limited or fragmented record of what occurred in the environment around the user. Accordingly, this disclosure also describes techniques for using content associated with other people if they provide permission. There are multiple ways that other participants in a conversation can grant the user access to their part of the conversation. Some people may provide a prior opt in to sharing such as family members or coworkers of the user. If voices of such people are identified in conversation with the user, the audio of those voices may also be processed the same way as the voice of the user. Authorization could also be granted in "real-time" or during a conversation. For example, a conversation participant could enter a password or otherwise communicate to the audio capture device of the user that it is acceptable to record his or her voice. A device of the conversation participant could also be an "known" device to the audio capture device of the user and the devices themselves can communicate the permissions based on prior affirmative opt in by the respective users.

In addition to granting permission to record and transcribe a voice, the contributions of other participants in a conversation may also be shared through transcripts. If one of the conversation participants also has an audio capture device that creates a transcript of only his or her voice, there will be a second transcript created from the conversation containing the words of that conversation participant. The two transcripts of the same conversation (i.e., of the user and the conversation participant) can be combined after the conversation is completed. This combined transcript provides a fuller record of the conversation than either of the individual transcripts. Having more pieces of the conversation available, whether obtained from audio of other voices or from shared transcripts, provides a larger amount of data for use in generating personalized computing systems for the user. Also, use of an audio capture device closest to the user will be more likely to accurately pick up that person's voice particularly in noise environments. Collecting each user's portion of a conversation separately and then joining together later can create a more accurate transcript and reconstruct the conversation with greater clarity. More data generally results in better training and more complete understanding of context; thus, it is desirable to include the contributions of other conversation participants when they grant permission to do so.

Features and technical benefits other than those explicitly described above will be apparent from a reading of the following Detailed Description and a review of the drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 illustrates privacy preserving audio capture and generation of a transcript from a conversation between a user and conversation participants.
FIG. 2 illustrates diarization of raw audio into multiple voice streams and generation of a transcript from a single voice stream.
FIG. 3 illustrates diarization of raw audio and generation of a multi-speaker transcript from two voice streams.
FIG. 4 is a flow diagram showing an illustrative process for privacy preserving audio capture and generation and use of a transcript or a combined transcript.
FIG. 5 is a flow diagram showing an illustrative process for privacy preserving audio capture of more than one conversation participants and generation of a multi-speaker transcript from more than one voice stream.
FIG. 6 is a flow diagram showing an illustrative process for sharing existing conversation portions from a same conversation to create and use a combined conversation record.
FIG. 7 is a computer architecture diagram illustrating computer hardware and software architecture for an audio capture device capable of implementing aspects of the techniques and technologies presented herein.
FIG. 8 is a diagram illustrating a remote computing environment capable of implementing aspects of the techniques and technologies presented herein.

### DETAILED DESCRIPTION

Persistent audio capture has been implemented in consumer devices such voice assistants (e.g., Friend Omi, Alexa by Amazon, and Siri by Apple). Some voice assistants continually listen, thus storing at least temporarily audio in memory, for a wake word. However, if such devices continually record all audio from the environment that raises privacy and security concerns particularly when used in public spaces. The fear that someone else's device might be listening to everyone in a public space can make users wary of these devices and hinder widespread adoption. The techniques of this disclosure provide a solution to the problem and make it possible to connect the physical world with AI while preserving privacy.

The devices and techniques of this disclosure enable the capture of large amounts of information specific to a user, even in non-commercial and personal settings, while protecting the privacy of others. This information, for example voice transcripts, provides data for training a personalized AI assistant and providing other personalized services. One component of bringing AI closer to users in the real world is making AI accessible even when a user is not in front of a computer. This can be done through an audio-based interface on a smart phone or other device. Generally, it will be a portable device, but it could also be implemented as a stationary smart speaker, as a vehicle-based system, or in other ways.

Another component is ensuring privacy and security of the data collected by these types of devices. Easy access to an AI assistant through the use of voice, and providing that AI assistant with context and training material from persistent audio recording has great potential to bring AI into new areas of everyday life. However, as mentioned above, devices that record audio from the environment without restriction often meet resistance due to concerns about how the recordings could be used or shared. To address those concerns and protect privacy, the techniques of this disclosure capture audio through a framework that limits an audio capture device to only recording its user's spoken content and possibly non-private metadata. The design of the audio capture device disclosed herein will not store or use recordings or transcripts of other speakers without their explicit permission.

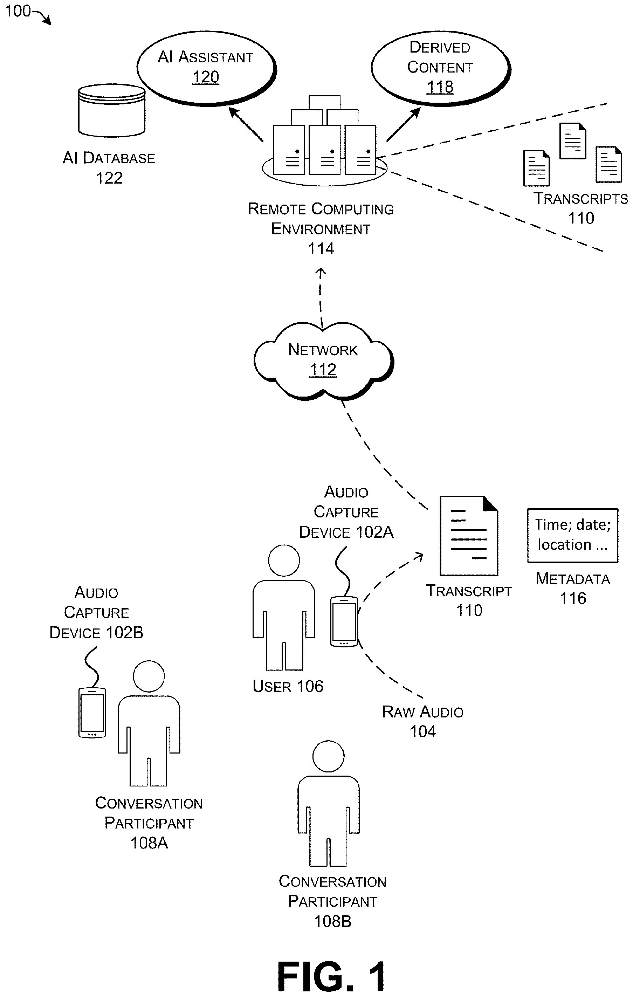

**FIG. 1** illustrates an architecture 100 for privacy preserving audio capture of one or more voices in a conversation. In this architecture 100 and audio capture device 102 records raw audio 104 from the environment. The audio capture device 102 may be any type of device that is capable of recording audio such as, but not limited to a smart phone, a wearable device, or an embedded device. Raw audio 104 is all the sounds that can be detected by the microphone of the audio capture device 102. This includes human voices such as the voice of the user 106 and voices of other people.

The audio capture device 102 is associated with a user 106. The user 106 may be an owner or primary (or exclusive) user of the audio capture device 102. In this architecture 100, the audio capture device 102 is associated with a single user 106. The user relationship between the user 106 and the audio capture device 102 indicates that the user 106 is the person most likely to be physically close to audio capture device 102. The audio capture device 102 can recognize the voice of its user 106 and respond to that voice differently than it does to other voices. Of course, it is possible that the audio capture device 102 may be used by multiple different people at different times in different contexts. Thus, the audio capture device 102 may have a primary user and one or more secondary users.

Although the techniques of this disclosure may be used when a user 106 is alone and there are no other people present, the privacy preserving aspects become important when there are others whose voices may be included in the raw audio 104. The conversation includes the speech of multiple people. A conversation as used herein refers to speech of the user 106 and the speech of at least one other person that occur during the same period of time and typically include alternations between the speech of the user 106 and the speech of the one or more other people. Another person participating in a conversation with the user 106 is referred to as conversation participant 108. There may be any number of conversation participants 108 in a conversation. FIG. 1 illustrates two: a first conversation participant 108A and a second conversation participant 108B. Conventionally, conversations also imply that there is an interaction between the participants. That they are speaking to each other. However, this is not strictly the case for a conversation detected in the raw audio 104. The intent of the speakers to talk "to each other" is not analyzed in defining a conversation or conversation participant 108. For example, the voice of a person sitting in an adjacent booth at a cafe may be captured and processed as that of a conversation participant 108 even though that person was not talking to the user 106. A conversation participant 108A other than the user 106 may have his or her own audio capture device 102B. The conversation may also include one or more conversation participants 108B without audio capture devices 102.

A transcript 110 is generated from the raw audio 104. The transcript 110 generated from the raw audio 104 captured by audio capture device 102A is, in a default configuration, limited to only transcribing the speech of the user 106. Although not shown in FIG. 1, a transcript may also be generated by audio captured from audio capture device 102B representing the speech of the conversation participant 108A. In an implementation, the transcript 110 is generated locally on the audio capture device 102. This protects privacy by limiting processing of the raw audio 104 to the local device that captured the audio. It also conserves network bandwidth by refraining from transmitting a relatively large audio file to a different device for processing. However, in other implementations, not shown, the raw audio 104 is transmitted across a network 112 and processed in a remote computing environment 114 to generate the transcript 110. Transmitting the raw audio 104 off of the audio capture device 102 may be limited to only situations in which the user has previously provided authorization for transfer of the raw audio 104. If the raw audio 104 is transferred to another computing device, such as the remote computing environment 114, any of the below processing steps of the raw audio may be completed by that of the computing device or environment rather than the audio capture device 102.

The audio capture device 102 may also generate metadata 116 and associate the metadata with the transcript 110. The metadata 116 may be limited to non-private metadata. Thus, the metadata 116 provides data about the context of the conversation for which the transcript 110 was generated without disclosing any type of personal identifying information. Examples of metadata 116 include date and time, geolocation, movement of the audio capture device 102 during the conversation, a number of speakers participating in the conversation (e.g., in FIG. 1 this would be three), a number of segments of audio that result after processing the raw audio 104 by diarization, the presence of any other known devices (e.g. audio capture device 102A recognizing its proximity to audio capture device 102B), and the like.

The audio of the user's 106 voice may also be used to annotate or tag the transcript 110. Speech analysis beyond simple speech-to-text processing may be used to identify aspects of verbal communication such as tone, intent, and emotion. For example, speech analysis may be used to identify whether certain words are spoken with a humorous or sarcastic intention. This type of information may be used to tag or annotate the transcript 110 to provide some of the additional information that can be lost when converting speech to text. These tags may be included in the metadata 116 or merged into the transcript 110.

This transcript 110, and optionally the metadata 116, may be sent through a network 112 to a remote computing environment 114. The network 112 represents any type of communication network such as the Internet. In many implementations, the audio capture device 102 will be a mobile device such as a smart phone or a wearable device and the network 112 will include at least in part a wireless network. However, it is also possible that the network 112 is a fully wired network for example if the audio capture device 102 is a smart speaker connected by ethernet cable to the Internet.

The remote computing environment 114 represents a computing environment that is physically and logically separate from the audio capture device 102. This may be a network server, collection of servers, cloud-based computing system, or the like. The remote computing environment 114 may store or use the transcript 110, metadata 116, and potentially audio recording. As used herein, conversational data refers to all data from both the initial recording (e.g., audio, video, etc.) of a conversation and any data derived from that such as the transcript 110 or metadata 116. Typically, the conversational data is stored in the remote computing environment 114 in a way that access is limited to that of the user 106. Thus, this continues to preserve privacy even after the conversational data has been moved off the device on which it was generated. The remote computing environment 114 may also store other transcripts 110 and conversational data of other conversations generated by other audio capture devices 102. For example, a transcript 110 generated by audio capture device 102B of the speech of conversation participant 108A may also be stored in the remote computing environment 114. The remote computing environment 114 may also store and make use of metadata 116 associated with the transcripts 110.

Conversational data available to the remote computing environment 114 may be used in any way in which a recording or transcript of a conversation or human speech can be used. This includes generating derived content 118 which is content other than the transcript 110 itself and potentially any associated metadata 116. Examples of derived content 118 include a summary of the transcript 110, a task list of tasks or "to do" items referenced in the transcript 110, and the like. Additional examples of derived content 118 may include sentiment analysis of the conversation and identification of key phrases or topics.

Another use for conversational data is training artificial intelligence (AI) systems such as, but not limited to, a personal AI assistant 120 for the user 106. An AI system may process the conversational data to train or modify a large language model (LLM) or large multimodal model (LMM) that supports the functioning of the AI system. These types of models serve as the computational foundation for the AI system's natural language understanding and generation capabilities. The conversational data provides valuable user-specific training data that may be utilized in several distinct ways including, but not limited to: (i) fine-tuning the underlying models to better recognize the user's particular vocabulary, phrasing patterns, and topical interests; (ii) developing specialized embeddings that represent the semantic space unique to the user's communication style; and (iii) creating personalized retrieval-augmented generation systems that can reference the user's past conversations, preferences, and knowledge domains.

The user 106 may also speak to the personal AI assistant 120 to provide commands or instructions. These commands and instructions may be identified from analysis of the content of the conversational data through intent classification algorithms that distinguish directive speech from conversational dialogue. The personal AI assistant 120 may analyze the conversational data to extract contextual information about the user 106, including speech patterns, vocabulary preferences, frequently discussed topics, and recurring phrases. This extracted information enables the personal AI assistant 120 to build a comprehensive user profile that enhances personalization capabilities. By processing multiple conversations over time, the personal AI assistant 120 can continuously refine its understanding of the user's communication style and preferences, thereby improving interaction quality.

In some implementations, the system utilizes the conversational data as a primary source for creating contextual seeds that initialize or enhance the personal AI assistant's knowledge base. These contextual seeds comprise structured data elements derived from the user's natural speech and serve as foundational reference points for future interactions. Using a transcript-based approach captures semantic content while eliminating the computational overhead associated with processing raw audio signals, thereby optimizing system resources.

The contextual seeds function as a semantic foundation for the personal AI assistant 120 and may be classified into several distinct categories to facilitate organized knowledge representation. Primary contextual seeds capture fundamental user attributes such as communication preferences, recurring topics of interest, and linguistic patterns. Relational seeds establish connections between concepts frequently discussed together, enabling the assistant to model the user's cognitive associations and knowledge frameworks. Temporal seeds track evolving patterns in the user's interests and vocabulary usage over time, allowing the system to prioritize recent information while maintaining historical context. Locational seeds establish associations between geographic contexts and situation-specific behaviors, allowing the assistant to adapt responses based on the user's physical environment while recognizing location-dependent vocabulary, priorities, and interaction patterns. This spatially-aware framework enables the personal AI assistant 120 to seamlessly transition between contextual modes appropriate to different settings without explicit commands, enhancing response relevance across diverse environmental contexts. The personal AI assistant 120 may implement a weighting mechanism that assigns variable significance to different seeds based on factors such as frequency of appearance in transcripts, recency of mention, and emotional emphasis as indicated by linguistic markers. This multi-tiered seed architecture enables the system to construct a nuanced representation of the user's knowledge domain and communication preferences while maintaining computational efficiency through selective information prioritization.

The personal AI assistant 120 may also itself generate various derived content 118 from conversational data such as the transcript 110, including but not limited to, semantic summaries, topic classifications, entity relationship maps, and contextual notes. This derived content 118 may be systematically stored in a personal AI assistant database 122 that functions as a persistent knowledge repository. When the user 106 engages with the personal AI assistant 120, the system can efficiently retrieve relevant content from this AI database 122 to provide contextually appropriate responses without requiring reprocessing of original audio data.

The conversational data may be analyzed using natural language processing techniques to identify explicit or implicit commands directed at the personal AI assistant 120. Command identification algorithms may evaluate sentence structure, verb usage, directive language, and contextual cues to determine when the user 106 is issuing instructions rather than engaging in a conversational with another person. Upon identification of a command, the personal AI assistant 120 may execute corresponding functions or provide appropriate responses according to its programming parameters.

In some implementations, the system implements a hierarchical processing architecture wherein the conversational data undergoes multiple analytical passes. An initial pass may identify basic elements such as named entities, temporal references, and action verbs. Subsequent processing layers may analyze higher-order relationships between these elements to derive more complex understanding of the user's intent or requirements. This multi-layered approach enables the personal AI assistant 120 to handle both straightforward commands and nuanced requests that require contextual interpretation.

The personal AI assistant 120 may maintain a conversational history derived from conversational data generated over time. This conversational history may be stored in the AI database 122. This historical record enables the personal AI assistant 120 to reference previous interactions when responding to ambiguous queries or requests with implicit references to prior conversations. By maintaining textual representations rather than audio recordings, the system provides enhanced privacy protection while still preserving the semantic content necessary for contextual understanding.

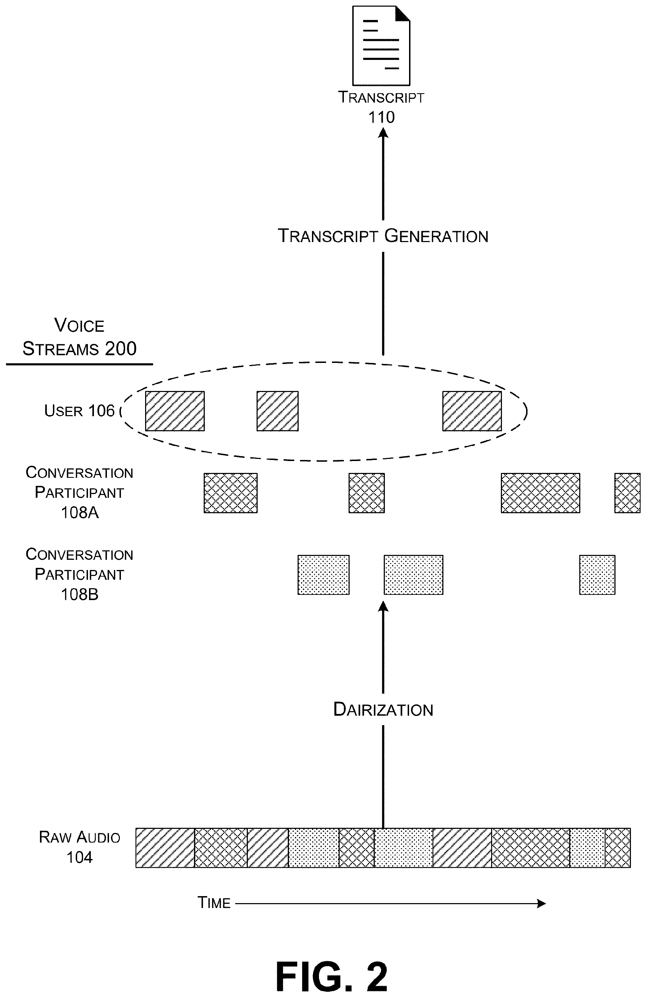

**FIG. 2** illustrates a diarization of raw audio 104 and generation of a transcript 110. The raw audio 104 as it is initially captured will contain the voices of the user 106 and any other conversation participants 108. Prior to diarization, the raw audio 104 may be processed with voice activity recognition (VAR) to identify when there is a human voice in the sounds detected by the audio capture device 102. If there are no voices detected, the audio capture device 102 may not record or retain the raw audio 104. This also saves processor cycles and makes the system more efficient by omitting the further processing steps on segments of raw audio 104 that do not contain voices.

Diarization, or speaker diarization, is the process of partitioning an audio stream containing human speech into homogeneous segments according to the identity of each speaker. Speaker diarization is a combination of speaker segmentation and speaker clustering. The first aims at finding speaker change points in an audio stream. The second aims at grouping together speech segments on the basis of speaker characteristics, thereby identifying "who spoke when" without requiring prior knowledge of speaker identities or the number of speakers present in the recording.

Any current or later developed diarization technique may be used. Current diarization systems typically employ a multi-stage processing pipeline comprising feature extraction, voice activity detection, speaker change detection, and speaker clustering. Feature extraction commonly utilizes acoustic embeddings such as x-vectors or d-vectors, which capture speaker-specific characteristics in a low-dimensional space. Exemplary clustering algorithms include hierarchical agglomerative clustering (HAC) with distance metrics such as probabilistic linear discriminant analysis (PLDA) scores, and graph-based methods such as spectral clustering. Advanced implementations may incorporate deep learning approaches, including end-to-end neural network architectures that jointly optimize segmentation and clustering objectives, thereby improving performance in challenging acoustic environments with overlapping speech and variable numbers of speakers.

In this example of a conversation with three participants, the raw audio 104 is diarized into three voice streams 200, one containing segments of audio of the voice of the user 106, one containing segments of audio of the voice of the first conversation participant 108A, and one contain segments of audio of the voice of the second conversation participant 108B. A voice stream 200, as used herein, may also be referred to as a speaker cluster and it includes all the segments from the raw audio 104 with the voice of the same person. Thus, diarization generates from the raw audio 104 separate sets of data which each contain only audio from a single person thereby making it possible to protect the privacy of other conversation participants.

Diarization can be performed without knowledge of whose voices are included in the raw audio 104. Thus, in order to determine which voice stream 200 to use for generation of the transcript 110, the voice of the user 106 is identified from the plurality of voice streams 200. Voice identification, also known as speaker recognition, is the process of identifying a speaker's voice in an audio recording. Voice identification techniques employ a range of methods, including spectral feature extraction (e.g., Mel-Frequency Cepstral Coefficients) and deep learning-based approaches (e.g., Convolutional Neural Networks), to characterize and distinguish individual speakers. These techniques can be used in conjunction with traditional statistical models, such as Gaussian Mixture Models, and machine learning classifiers, like Support Vector Machines, to achieve robust speaker identification.

A voiceprint of the user 106 identifying characteristics of the user's voice may be used for speaker recognition. A voiceprint, similar to a fingerprint, is a unique representation of an individual's vocal characteristics, capturing the distinct patterns and traits of their speech. This voiceprint can be generated through various acoustic and spectral analyses, such as extracting Mel-Frequency Cepstral Coefficients (MFCCs), Linear Predictive Coding (LPC) coefficients, and other spectral features. By comparing the voiceprint of a given speaker to a database of known voiceprints, speaker identification systems can verify the identity of the speaker, enabling applications such as speaker verification.

Once identified, only the voice stream 200 of the user 106 is retained in many implementations. The voice streams 200 of other conversation participants 108A, 108B as well as the raw audio 104 are discarded or destroyed. Transient recordings may be destroyed by overwriting or using other techniques to actively delete or render unusable files in the memory of the audio capture device 102.

Once the segments of audio containing the voice of the user 106 are isolated and identified, they may be used for transcript generation to generate the transcript 110. As described above, in many implementations this will be performed locally on the audio capture device 102 that recorded the raw audio 104. However, it is also possible for the voice stream 200 of the user 106 to be sent to a remote computing environment 114 for generation of the transcript 110. The voice stream 200 of the user 106 may be saved on either the audio capture device 102 or in the remote computing environment 114. This provides the user 100 to future access not only the transcript 110 but also the actual audio captured and maintained in a privacy preserving way. By default, the voice stream 200 of the user 106 does not leave the audio capture device 102 unless the user 106 affirmatively grants permission.

The transcript 110 may be generated by any known or later developed technique for creating transcripts from recordings of speech. A transcript 110 of a user's 106 spoken words is generated through a process called speech-to-text or automatic speech recognition (ASR). In this process, the audio recording (e.g., the voice stream 200 of the user 106) is analyzed to identify the individual sounds or phonemes that make up the spoken words. These phonemes are then combined to form words, and the words are arranged in a sequence to create a transcript. One technique uses machine learning algorithms and statistical models, such as hidden Markov models (HMMs) or deep neural networks (DNNs), which are trained on large datasets of labeled speech recordings. The resulting transcript 110 can be further processed to correct errors, add punctuation, and improve readability.

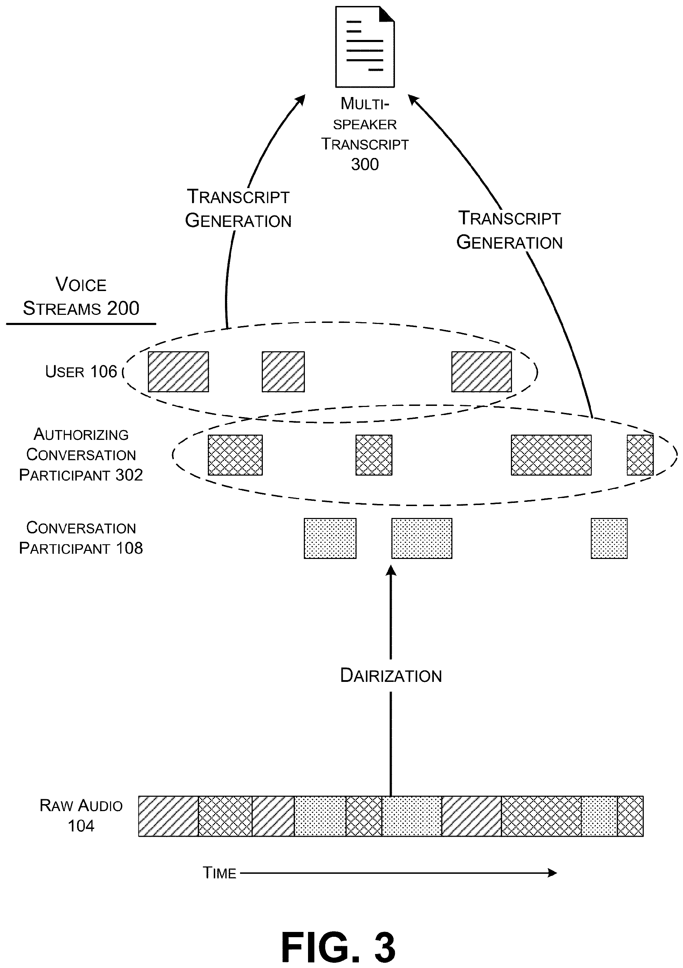

**FIG. 3** illustrates diarization of raw audio 104 and generation of a multi-speaker transcript 300 from multiple voice streams. The techniques illustrated in FIG. 3 are similar to those illustrated in FIG. 2 but use the voice streams 200 of multiple people to generate a multi-speaker transcript 300. By default, the audio capture device 102 is limited to processing only the voice stream 200 of the user 106. However, there may be circumstances in which a conversation participant 108 has authorized the user 106 to generate a transcript from his or her voice. This type of conversation participant 108 is referred to as an authorizing conversation participant 302.

Following diarization, the voice streams 200 of the user 106 and the authorizing conversation participant 302 are identified. The voice stream 200 of the authorizing conversation participant 302 is identified by any of the same techniques used to identify the voice stream of the user 106. This may include providing a voiceprint of the authorizing conversation participant 302 to the audio capture device 102 so that it can identify the voice stream 200 of the authorizing conversation participant 302. Other techniques for identifying the voice stream 200 of an authorizing conversation participant 302 include manual identification. The authorizing conversation participant 302 can indicate to the audio capture device 102 which voice is his or hers such as by listening to a segment of speech and then responding. Voice streams 200 of other conversation participants 108 and the raw audio 104 are deleted protecting the privacy of all of those who did not opt in to recording of their voices. The voice streams 200 of the user 106 and authorizing conversation participant 302 may be saved either locally on the audio capture device 102 and or in a remote computing environment 114.

There are multiple ways in which an authorizing conversation participant 302 can affirmatively opt in to allowing audio of his or her voice to be transcribed. There may be a prior opt in based on a relationship between the authorizing conversation participant 302 and the user 106. For example, family members or coworkers may provide advance authorization for their voices to be transcribed if they are in a conversation with the user 106. This preauthorization may be limited temporarily, spatially, or by device. For example, coworkers may limit this authorization to transcribe their voice only during working hours and/or at work locations. Similarly, family members may limit authorization to generate a transcription from their voice only to a certain audio speaker that is placed in the living room. The prior opt in may be implemented by the authorizing conversation participant 302 providing a voiceprint that can be used to identify a voice stream 200 containing his or her speech. Limitations on the authorization may be encoded with the voiceprint so that it can only be accessed and used when certain conditions are true such as temporal or spatial limitations.

The opt in can also be provided during the conversation in "real-time." The authorizing conversation participant 302 can communicate to the audio capture device 102 authorization to transcribe his or her voice either at the start or during a conversation. This may be done by the authorizing conversation participant 302 interacting with the audio capture device 102 such as providing a biometric validation or entering a password. The authorizing conversation participant 302 could also speak to the audio capture device 102 to provide authorization and at the same time provide a voiceprint for identifying his or her speech. It could also be done by a device of the audio conversation participant 302 communicating with the audio capture device 102. For example, the authorizing conversation participant 302 may have his or her own audio capture device 102B that may be recognized by the audio capture device 102A of the user 106. Once proximity of the two devices is identified, the authorizing conversation participant 302 may be presented with a push notification or another way to indicate on his or her own device that conversation capture is authorized. Granting authorization may include sending a voiceprint of the authorizing conversation participant 302 from his or her device to the audio capture device 102A of the user 106.

Once authorized, the voice streams 200 of the user 106 and any authorizing conversation participant 302 are processed the same. The voice streams 200 may be joined together to create a single audio file that contains audio from the voice of the user 106 and authorizing conversation participant a participant 302 but omits audio from any other conversation participants 108. Segments of audio from both voice streams 200 is processed to generate a multi-speaker transcript 300. Because the multi-speaker transcript 300 includes transcriptions of more than just the user 106 it provides greater context and more complete information about the conversation. Thus, it may be more useful for training the personal AI assistant 120 and generating derived content 118 then a transcript 110 generated only from the voice of the user 106 alone.

### Illustrative Methods

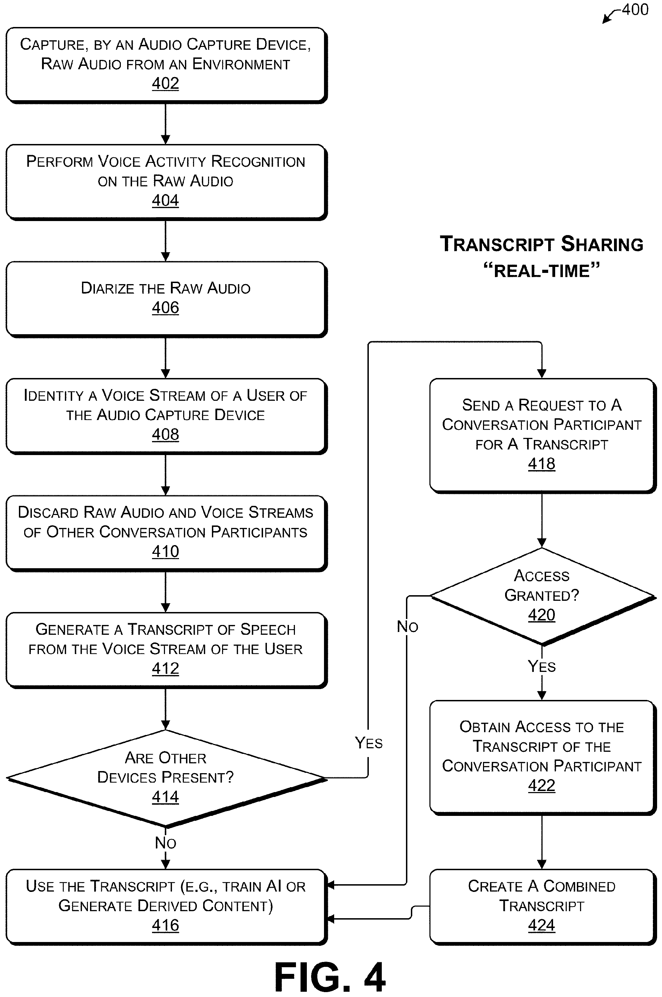

**FIG. 4** illustrates a process 400 for privacy preserving audio capture and generation and use of a transcript or a combined transcript obtained through transcript sharing. This includes transcript sharing in "real-time" such as during the conversation or shortly after the conversation has completed.

At operation 402, raw audio is captured from an environment by an audio capture device. The audio capture device may be configured to persistently listen and capture audio from the environment this is persistent audio monitoring. In some implementations, the audio capture device may capture audio from the environment only when a voice is detected. Capturing audio from an environment means the audio is captured by a microphone of a device rather than obtained from an on-line interaction such as a phone call or video conference. The raw audio is stored only temporarily such as in volatile memory or in a memory buffer that is frequently overwritten.

At operation 404, VAR is performed on the raw audio. VAR may be used as mentioned above to identify segments of the raw audio that contain human voices. Persistent audio recording may be activated only when voices are detected. Also VAR may be used for already recorded audio to determine which portions of raw audio from the environment contain voices and should be saved. Not saving, even temporarily, portions of the raw audio that do not contain voices conserves memory. VAR may also be used to segment the raw audio into portions that contain speech and portions that do not. VAR (also referred to as Voice Activity Detection or VAD) employs several methodologies to discriminate human speech from non-speech signals. Any suitable current or later developed technique may be used.

Traditional approaches utilize energy-based heuristics that analyze signal energy distributions and zero-crossing rates across frequency bands to identify speech patterns. More sophisticated techniques leverage statistical models such as Gaussian Mixture Models (GMMs) that characterize the acoustic properties of speech versus non-speech. Contemporary systems predominantly employ deep learning architectures, including Convolutional Neural Networks (CNNs) and Recurrent Neural Networks (RNNs), which extract temporal and spectral features directly from audio spectrograms or mel-frequency cepstral coefficients (MFCCs). These neural approaches have demonstrated superior robustness in challenging acoustic environments with varying signal-to-noise ratios. The speech segments identified through VAR are inputs for subsequent diarization processes, which further analyze who spoke when in multi-speaker scenarios.

The application of VAR provides multiple advantages in audio processing pipelines. Beyond storage optimization through selective retention of speech-containing segments, VAR enhances computational efficiency by filtering out non-relevant audio data before more intensive processing stages such as diarization. Advanced VAR systems incorporate adaptive thresholding mechanisms that automatically adjust to ambient noise conditions, improving performance across diverse recording environments. Some implementations utilize contextual information through bidirectional processing to make more accurate speech/non-speech decisions at segment boundaries where traditional energy-based methods often falter.

Several established software frameworks and libraries provide robust implementations for Voice Activity Recognition, including WebRTC's VAD module which offers lightweight real-time detection capabilities, the open-source Kaldi speech recognition toolkit featuring advanced VAD components, Google's TensorFlow-based Speech Commands recognition system, PyAnnote's VAD models trained on diverse speech corpora, Silero VAD's highly portable neural models optimized for edge deployment, NVIDIA's RIVA speech AI offering high-performance VAD capabilities, and proprietary solutions from cloud providers such as Google Cloud Speech-to-Text API, Amazon Transcribe, and Microsoft Azure Cognitive Services which incorporate sophisticated VAD as preliminary processing stages within their speech analytics pipelines.

At operation 406, the raw audio is diarized. Diarization separates the raw audio into multiple voice streams, one for each unique voice recognized in the raw audio. The number of separate speakers identified by diarization may be saved as metadata. There are many existing tools that can perform diarization such as open-source tools like pyannote.audio or resemblyzer which implement neural network-based speaker segmentation, or cloud services such as Google Cloud Speech-to-Text API, AWS Transcribe, or Microsoft Azure Speech Service that offer built-in speaker diarization capabilities with configurable parameters for speaker count and separation thresholds.

At operation 408, a voice stream of a user of the audio capture device is identified. Voice identification is a process that involves analyzing the unique acoustic characteristics of an individual's speech to identify who is speaking. Open-source tools like Kaldi, PyTorch, and scikit-learn may be used to develop and implement voice identification systems.

At operation 410, the raw audio and voice streams of other conversation participants besides the user of the audio capture device are discarded. This protects the privacy of everyone other than the user of the audio capture device because any recording of their voices is quickly discarded. Discarding includes deletion of files containing these recordings in such a way that they cannot be recovered. This could involve encryption or other techniques for making the data unrecoverable even if it still remains in some form stored in memory. One technique that can be used to discard these recordings is to overwrite them with other data such as later acquired recordings captured by the audio capture device. An additional benefit of discarding the raw audio and the voice streams of other conversation participants is a reduction in memory needed to store the audio files.

At operation 412, a transcript of speech is generated from the voice stream of the user. Transcription refers to the process of converting acoustic speech signals into textual representation through automated analysis of phonetic patterns and linguistic content. Any current or later developed technique may be used to transcribe the speech of the user. Some suitable techniques commonly used for transcription include automatic speech recognition (ASR) systems utilizing deep neural networks, hidden Markov models, acoustic modeling, language modeling, and sequence-to-sequence transformer architectures with attention mechanisms. There are multiple existing tools that may be used to transcribe speech in this context such as, but not limited to, cloud-based speech-to-text APIs, specialized transcription software employing speaker-adaptive training, time-aligned forced alignment systems, and bidirectional encoder representations from transformers (BERT) for contextual speech understanding.

This transcript will typically include only the words uttered by the user. However, it is possible that due to errors in diarization there may be a small amount of speech recorded that is not speech of the user. There may also be instances when multiple people are speaking at approximately the same time and a segment of the recording containing speech of the user also contain speech of another conversation participant. In these instances, there may be some words included in the transcript that were not uttered by the user. However, the situation should be minimal given robust protocols for diarization and speaker identification.

In some implementations, speaker identification can be used a second time as a filter for the diarized segments to only transcribe those words that identified as speech of the user. Segments of the diarized raw audio that have already been identified as containing the voice of the user, would again be screened on a word-by-word or phoneme-by-phoneme basis before transcription.

Metadata associated with the raw audio may also be captured and associated with the transcript. The type of metadata could include any type of data describing or providing context for the raw audio such as the date, time, a geolocation, a network access point, an identifier of the user associated with the audio capture device, identifiers or any other devices detected in proximity to the audio capture device during the recording, and the like. The metadata may also include information derived from processing the raw audio such as the number of unique speakers identified by diarization and whether the raw audio includes or does not include the voice of the user.

At operation 414, it is determined if there are any other audio capture devices present during the conversation. Due to the proximity to the user's audio capture device, these other devices are likely associated with conversation participants. Those other audio capture devices may also be configured to generate transcripts of the conversation. These would be transcripts of the speech of the respective conversation participants not of the user. Thus, the presence of other audio capture devices during the conversation suggests that there may be transcripts available for the speech of other people participating in the conversation.

The proximity of the devices to each other may be determined by any current or later developed technique. This could be achieved, for example, by devices directly communicating with each other through the use of radio transceivers or other type of wireless communication technology. It could also be achieved by the devices reporting geolocation and time to a server which would then identify time and place correlations with other devices.

The user receives an indication of one or more other devices proximate to the audio capture device during capturing of the raw audio. In one implementation, every other device that is detected may be identified. The identified devices could be limited to only devices that are within a certain distance (e.g., two meters) and/or are proximate for more than a threshold amount of time (e.g., one minute). Thus, at least some of these other devices will be associated with the voice streams of a conversation participant other than the user.

However, in a crowded or public environment there may be many other people (and their devices) near the user but not part of the conversation. Techniques may be used to attempt to filter out these unrelated devices. The other devices identified may be filtered or limited to only those devices for which there is some pre-existing connection with the audio capture device of the user. This would exclude devices of unrelated individuals who simply happen to be in the same place at the same time. For example, the other devices identified at operation 414 could be limited to only paired devices that have in some way previously identified themselves to the audio capture device of the user. Techniques for pairing may be similar analogous to those used for pairing a smart phone and a Bluetooth device or NFC taps. One technique is to limit the other devices identified to only those that correspond with someone who is in a contact list of the user.

However, there may be times when the user engages in conversation with someone new, or a known person who has a new device, and it is desirable to identify that device as present during the conversation even though there is no pre-existing connection. The filtering or the threshold for including a device in a list of identified devices may be adjustable based on factors such as the number of total devices detected, distance between two devices, a length of time two devices are proximate to each other, and additional factors. For example, if there are only a few devices proximate to the user's audio capture device and those other devices are close to each other for more than 10 minutes, they may be identified as being present even if there was no pre-existing connection.

If no other devices are present, process 400 proceeds along the "no" path to operation 416. This could occur if the user is alone or if devices of the conversation participants are not recognized by the user's audio capture device. At operation 416, the transcript is used in any of the ways described above such as, but not limited to, training a personal AI assistant or generating derived content such as a summary of the conversation, a task list, a follow-up message to the user, a reminder, or the like. The transcript may be transmitted to a remote computing environment for processing. Transmitting the transcript instead of the audio file uses less network bandwidth. Once at the remote computing environment, the derived content can be generated by computing devices in remote computing environment rather than audio capture device. This reduces processor usage and battery consumption for the audio capture device.

If, however, there are other devices present, process 400 proceeds along the "yes" path to operation 418. At operation 418, a request to share a transcript or voice stream is sent to a conversation participant associated with a device that was identified as being present during the conversation. This is a communication specifically requesting a transcript of speech of the conversation participant or the voice stream of the conversation participant created from the raw audio. The user of the audio capture device may be presented with a user interface showing other audio capture devices from which a transcript or voice stream could be requested. The user then can select which devices from this list he or she wishes to request transcripts or voice streams. Alternatively, requests may be sent automatically without requiring direct user interaction for some or all of the audio capture devices that are present during the conversation.

The request may be sent directly from the audio capture device of the user to the audio capture device of the conversation participant. This may be implemented using a radio transceiver or other wireless communication technology. Alternatively, the message may be provided to the other person in a different way that does not necessarily use his or her audio capture device such as by email. The request may be sent via a network such as the Internet.

The request may be sent during the conversation. That is, the request may be sent shortly after the two people begin speaking and while they are still talking. Thus, the request for the transcript or voice stream could be sent before the transcript of the user's speech has been generated. The request can alternatively be sent after the conversation has finished.

At operation 420, it is determined if the conversation participant who received the request chooses to grant access to their transcript or voice stream or not. In some implementations, the recipient of the request must affirmatively indicate consent to share their transcript or voice stream. However, in other implementations, there may be conditions such that in response to a request to share a transcript or voice stream, access will be automatically granted. This could be when certain conditions are true such as the existence of inclusion of the audio capture device of the user on a "safe list" or recognition as a trusted device. Automatic authorization can also be limited by time and/or location. For example, a request sent from an audio capture device of a coworker for a conversation that occurred at work during business hours may be automatically granted.

If access is not granted, process 400 proceeds along the "no" path to operation 416. This process is repeated for each other device that is present during the conversation. That is, a request to share a transcript or voice stream may be sent to multiple devices. The sharing of a transcript or voice stream would then depend on whether or not access is granted by the users of each of those devices. If, however, access is granted then process 400 proceeds along the "yes" path to operation 422.

At operation 422, the user obtains access to the transcript or voice stream of the speech of the conversation participant. The transcript or voice stream may be provided to an account of the user. For example, if the transcript or voice stream of the conversation participant is available in a remote computing environment, that transcript or voice stream may be copied to an account of the user or access otherwise granted to the user. The transcript or voice stream may also be sent to the audio capture device of the user. Thus, the multiple ways by which the user can gain access to a transcript or voice stream which was created for the conversation participant and contains the transcript of only the voice of the conversation participant. Access to the transcript or voice stream may also include access to any metadata associated with the transcript or voice stream.

At operation 424, the transcript or voice stream of the user's speech and the transcript or voice stream shared by a conversation participant are combined to create a combined transcript or combined voice stream. The text of the two transcripts may be interleaved in the order in which the words were spoken. Audio from two voice streams may be similarly interleaved to create a combined voice stream. The combined voice stream may also be transcribed to create a combined transcript. Thus, the combining needed to generate a combined transcript may take place at the level of the transcripts or the voice streams.

Combination of transcripts is accomplished through timestamps associated with the transcripts, with adjustments made for different timestamp formats and potential clock drift between recording devices. Content analysis of the text can also be used to determine the most probable order of the utterances, including identifying conversational pairs, analyzing topic continuity, and evaluating semantic coherence between adjacent utterances. Potential moments where a speaker participated but was not recorded and/or transcribed can be identified by detecting unnatural conversational jumps or analyzing response patterns suggesting missing prompts. If multiple conversation participants have granted access to their transcripts, multiple transcripts to which the user has access may be combined to generate a single combined transcript. Thus, if every participant in the conversation granted access to their transcripts, then the combined transcript would provide a complete record of all speech in the conversation.

The combined transcript may be further processed to address missing portions and overlapping speech. When the transcripts indicate overlapping speech, both speakers' utterances are preserved while the overlap is marked to maintain conversational context. For segments where untranscribed participants likely spoke, placeholders can be inserted indicating approximate timing and duration of these gaps based on contextual cues. Preprocessing to standardize transcript formats and extract available metadata may be performed before combination occurs. This ensures that despite having incomplete representations of the full conversation, the resulting combined transcript maintains maximum coherence and accurately represents the flow of the dialogue between the transcribed speakers.

However, the transcript of the user and the transcript of the conversation participant do not necessarily have to be combined. The two transcripts could be used as two separate documents or files. Returning to operation 416, if there are multiple transcripts, the transcript of speech of the user and the transcript of speech of the conversation participant are used together. Using the two transcripts together encompasses using a combined transcript created from the two separate transcripts as well as using two transcripts that are not combined. Using the two transcripts together provides greater context for training a personal AI assistant, generating derived content, or any other usage.

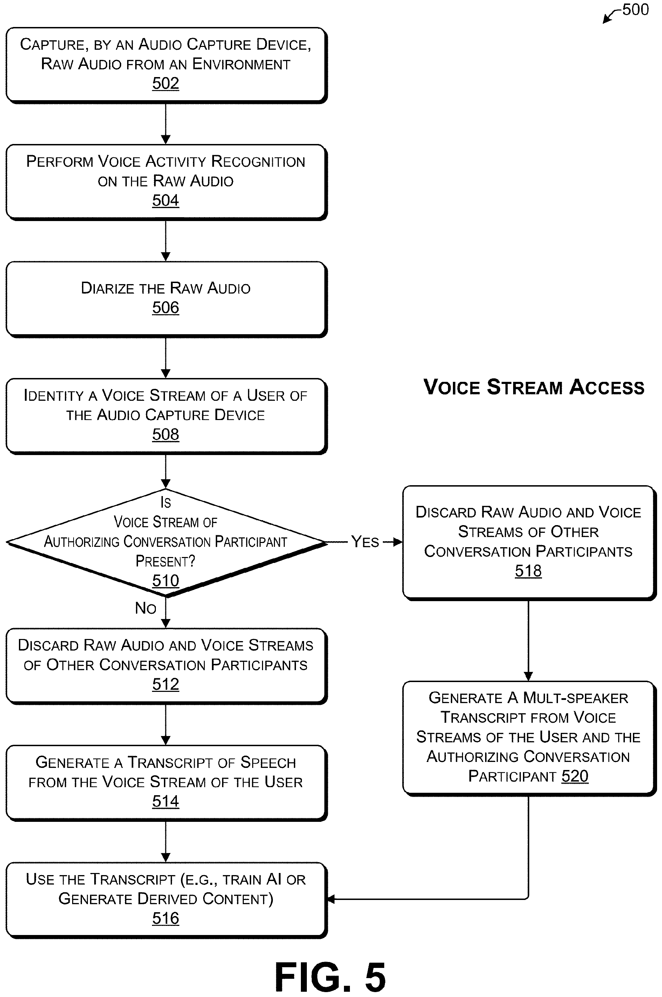

**FIG. 5** illustrates a process 500 for a process 500 for privacy preserving audio capture and generation and use of a transcript or a multi-speaker transcript obtained from processing voice streams of multiple different people in a conversation. Process 500 differs from process 400 and that the speech of conversation participants is obtained directly from audio of their voices rather than from sharing transcripts.

Operations 502-508 of process 500 are identical to those of operations 402-408 of process 400. In brief, raw audio is captured and processed to identify a voice stream of a user.

At operation 510, it is determined if one of the separate voice streams generated by diarizing the raw audio contains the voice of an authorizing conversation participant. An authorizing conversation participant is a person who is authorized access to his or her voice stream from the conversation. As discussed above, this authorization may be limited to only specific times and places. The voice stream of an authorizing conversation participant may be identified as a voice stream of that individual by any of the same techniques that are used to identify the voice stream of the voice of the user. For example, it may be determined that one of the voice streams is the voice of an authorizing conversation participant by comparing a voiceprint of the authorizing conversation participant to each of the separate voice streams and identifying a match. In some implementations, the voiceprint of the authorizing conversation participant may be shared with the audio capture device of the user. Sharing of the voiceprint may be used as an indication that accessing the voice stream is authorized.

In some implementations, authorization may be provided when the audio capture device of the user receives an authorization token from the authorizing conversation participant while the raw audio is captured. An authorization token is a secure digital credential that grants permission for one participant to record another participant's voice stream during a conversation. This token can be any type of token such as an encrypted token used to represent a value, typically with properties including a defined lifetime (usually limited to a single conversation), scope of authorization (specific to one voice stream), and cryptographic security measures. It may be transmitted directly such as wirelessly, from a device of the authorizing conversation participant to the audio capture device of the user. In some implementations, the authorization token can contain or be linked to the voiceprint of the authorizing conversation participant. Thus, the existence of the authorization token on the audio capture device may be used to determine that the authorizing conversation participant is authorized access to his or her voice stream.

The implementation of authorization tokens may vary based on system requirements and security considerations. For example, a token may be structured as a JSON Web Token (JWT) containing issuer information, subject identification, expiration time, and authorization scope, all secured with a digital signature. Alternative implementations include Compact Binary Object Representation (CBOR) tokens optimized for devices with constrained resources, Platform-Agnostic Security Tokens (PASETO) offering enhanced security properties, or capability-based tokens that specify granular permissions for the audio capture. The token structure typically includes fields identifying the authorizing participant, the specific voice stream being authorized, temporal constraints, and cryptographic proof of authenticity.

Token verification is typically accomplished through a public key infrastructure (PKI) approach, where each participant's device maintains a unique cryptographic identity. When authorization is granted, the authorizing participant's device creates a token containing the relevant authorization parameters and signs it using their private key before transmission. Upon receipt, the audio capture device verifies the token's signature using the authorizing participant's public key, which may have been exchanged during initial contact or retrieved from a directory service. This verification process confirms both the token's authenticity and the identity of the authorizing participant without requiring continuous network connectivity. Once verified, the audio capture device can proceed with capturing and processing the authorized voice stream for the duration specified in the token.

If there are no voice streams of authorizing conversation participants, then the only audio which will be transcribed is that of the user and process 500 proceeds along the "no" path to operation 512. Operations 512-516 are the same as operations 410, 412, and 416 of process 400.

If there is at least one voice stream of an authorizing conversation participant present, process 500 proceeds along the "yes" path to operation 518. At operation 518, the separate voice streams for other voices besides the user of the audio capture device and any authorizing conversation participants are discarded. If there are multiple authorizing conversation participants, multiple other voice streams will be retained. The raw audio is also discarded. Discarding includes all the processes for deleting or otherwise making unavailable an audio file described above. The remaining voice streams that are not discarded may be stitched back together or recombined to create a combined voice audio file that contains the speech of the user and all authorizing conversation participants. This is not the raw audio portion submitted, but rather a file created by combining separate voice streams created through diarization. If every participant in the conversation is an authorizing conversation participant, then that combined voice audio file may be very similar to the raw audio other than any artifacts introduced by the processes of diarization and recombination.

At operation 520, a multi-speaker transcript is generated from the voice streams of the user and authorizing conversation participant or from the combined voice audio file. The multi-speaker transcript is a transcript generated from more than one voice stream. It is generated from the voice stream of user and any authorizing conversation participants either by processing separate voice streams or by processing a file that contains multiple voices. The transcript is generated directly from the audio rather than a combination of two transcripts as discussed in connection with process 400. The end result, a transcript of the speech of the user and a conversation participant, may be the same or very similar regardless of which technique is used. The difference lies in what is shared, the voice stream or the transcript of the conversation participant

A transcript generated from raw audio without diarization and separation into multiple voice streams could also be thought of as a multi-speaker transcript because it transcribes the voices of multiple different people. However, as used herein a multi-speaker transcript refers to a transcript formed from some subset of voice streams obtained by processing raw audio. Thus, a multi-speaker transcript omits at least one voice stream that can be detected in the raw audio. By way of differentiation, if every participant in a conversation authorizes use of their voice stream for generation of a transcript that is referred to as an all-speaker transcript.

At operation 516, the multi-speaker transcript is used in the same way as a transcript of only the voice of the user. For example, the multi-speaker transcript may be used to train a personal AI assistant or generate derived content.

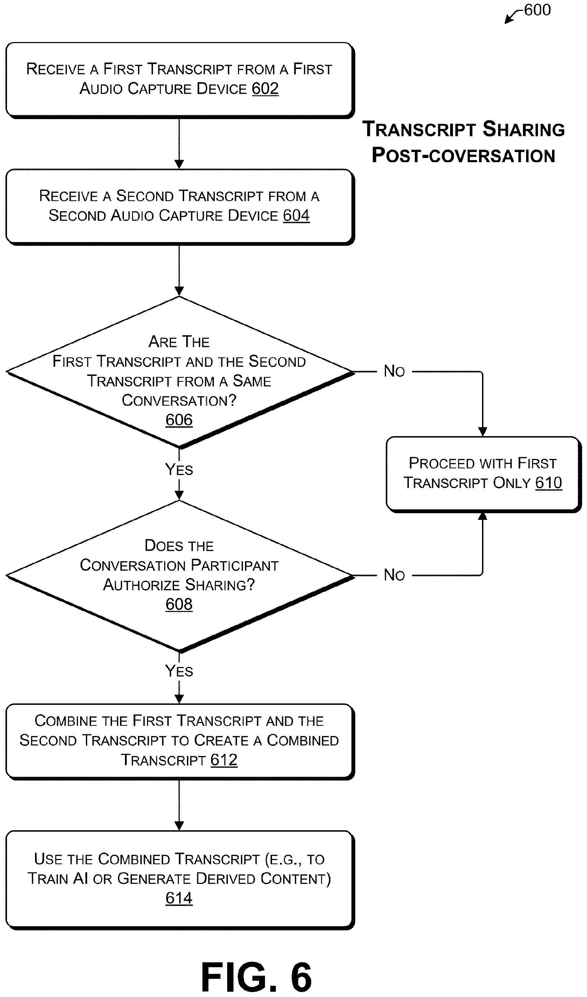

**FIG. 6** illustrates aspects of a process 600 for matching and combining conversation portions through sharing. A conversation portion is a portion of a conversation in any modality containing the speech of only one participant. One example is a voice stream created by diarization. A transcript of speech is also an example of a conversation portion. Other modalities such as video containing only the speech and image of one participant are also included within the scope of conversation portion. This includes sharing post conversation and may be implemented "in the cloud" such as by a remote computing environment. For example, transcripts created from past conversations may be shared well after the conversation is over.

At operation 602, a first conversation portion is received from a first audio capture device. The first conversation portion may be a transcript of a voice stream of a user, audio, or video contain the voice of the user. The first audio capture device is associated with the user. In this context, association means that the first audio capture device is configured to record only the speech of the user. The first conversation portion may be received, for example, from the first audio capture device by a remote computing environment via a network such as the Internet.

At operation 604, a second conversation portion is received from a second audio capture device. The second conversation portion may be a transcript of a voice stream of a conversation participant, audio, or video contain the voice of the user. The second audio capture device is associated with a conversation participant. In this context, association means that the second audio capture device is configured to record only the speech of the conversation participant. The second conversation portion may also be received, for example, from the second audio capture device by the remote computing environment via a network. Thus, the same remote computing environment may receive both conversation portions from both the first audio capture device and the second audio capture device. In some implementations, the remote computing environment may receive a large number conversation portions from many different audio capture devices.

At operation 606, it is determined if the first conversation portion and the second conversation portion are from a same conversation. If the remote computing environment receives the first conversation portion and the second conversation portion independently, they may not be inherently linked or associated with each other in any way when initially received. Thus, some type of analysis, processing, or access to additional information may be required in order to determine that both transcripts represent the speech from the same conversation. One way this could be done is by determining that there was proximity of the first audio capture device to the second audio capture device. This may involve analyzing signal strength or acoustic features, such as reverberation or background noise, to estimate the physical closeness of the devices. Furthermore, fine-grained timestamp correlation can be used by analyzing the timestamps of individual utterances within each transcript. This involves calculating the average time difference between turns and looking for consistent patterns, including overlapping or interleaved speech. A tolerance window may be applied to account for slight variations in device clocks and processing delays. If both audio capture devices are identified as being close to each other at approximately the same time, based on these analyses, it may be inferred that they are from the same conversation.

Other types of conversation indicia may also be used to determine that two, or more, conversation portions are from the same conversation. This could include cryptographic identifiers shared between devices when in proximity to each other or a record of "handshaking" having occurred between devices. Sharing a cryptographic identifier, other types of tokes, and handshaking can be implemented by any technique suitable for exchanging information between devices in close proximity such as NFC, BLE, and the like. The presence of the same conversation indicia, such as in metatdata, in two conversation portions may be used to determine that the two conversation portions are from the same conversation.

In some implementations, content analysis may also be performed on the conversation portions, such as transcripts, to determine if they appear logically related and to be part of the same conversation. This may be done to distinguish conversation portions generated by devices which, although at the same place at the same time, were associated with people who are not actually talking to each other. For example, keyword/topic analysis can be conducted using techniques such as Term Frequency-Inverse Document Frequency (TF-IDF) to identify statistically significant terms and phrases within both conversation portions. If both conversation portions share a high concentration of similar, unique terms, it suggests a common topic. Additionally, topic modeling, such as Latent Dirichlet Allocation (LDA), can be used to identify underlying topics in each conversation portion and compare the topic distributions, where similar distributions indicate a shared context. Named Entity Recognition (NER) can extract entities like names, locations, and organizations, and the presence of the same entities in both conversation portions reinforces the likelihood of a shared conversation. Semantic similarity can be assessed through word embeddings, such as Word2Vec, GloVe, or BERT embeddings, where vector representations of words or phrases are compared using cosine similarity to determine relatedness. Sentence or paragraph embeddings, such as those generated by Sentence-BERT, can capture the overall meaning of utterances.

Furthermore, dialogue structure analysis can be employed to examine the patterns of interaction within the conversation portions. For instance, turn-taking analysis can reveal consistent patterns of speaker alternation, suggesting a single conversation. Dialogue act classification can categorize utterances into types like questions, answers, or statements, and comparing the sequences of these acts can reveal similarities in conversational flow. Coherence and cohesion analysis, using techniques like discourse parsing and anaphora resolution, can identify logical connections between utterances, further indicating whether they are part of a continuous conversation. Integrating metadata, such as device or user IDs, and contextual information, like calendar events or contact lists, can further improve the accuracy of determining if the conversation portions originate from the same conversation.

If the first conversation portion and the second conversation portion are not the same conversation, process 600 proceeds along the "no" path to operation 610. At operation 610, further analysis and use proceeds with only the first conversation portion. If, however, the first conversation portion and a second conversation portion are from the same conversation, process 600 proceeds along the "yes" path to operation 608.

At operation 608, it is determined if the conversation participant authorizes sharing. Although the user and the conversation participant are in a conversation, the conversation participant may or may not authorize sharing of their transcript or other conversation portion with the user. The existence of a preauthorization from the conversation participant may be used to determine that he or she has authorized sharing of the second conversation portion with the user. This preauthorization may be communicated to an account of the user and/or may be associated with the second conversation portion. For example, metadata associated with the second conversation portion may indicate with whom it can be shared. The preauthorization may be based on identity as indicated above. That is, the conversation participant authorizes sharing with certain other users based on their identity. The preauthorization may also be based on or limited by at least one of time or location. For example, the conversation participant may only authorize sharing of conversation portions from conversations that happened during working hours or that happened while physically at the workplace.

In some implementations, the conversation participant may authorize sharing of the second conversation portion in response to a request from the user. A system, such as a system that is part of a remote computing environment, may identify to the user that the conversation participant participated in the same conversation. This may be done following the determination that the first conversation portion and the second conversation portion are from the same conversation. If the user is interested in obtaining access to the second conversation portion, he or she may request it from the conversation participant.

The remote computing environment, or other system, may then receive a request from the user for permission to access the second conversation portion. If there is no preauthorization granting access to the user, the system may then send a request to the conversation participant for access to the second conversation portion by the user. This request may be provided to the audio capture device of the conversation participant or it may be communicated in a different means such as by email. The conversation participant responds to the request either granting access to the second conversation portion or denying access. Failure to respond and affirmatively grant access is interpreted as denying access. If the conversation participant authorizes sharing either by preauthorization or by response to a request, process 600 proceeds along the "yes" path to operation 612. If the conversation participant does not authorize sharing, then process 600 proceeds along the "no" path to operation 610.

At operation 612, the first conversation portion and the second conversation portion are combined to create a combined conversation record. A combined conversation record is a combination of multiple conversation portions that is the same modality as the conversation portions. For example, a combination of two transcripts creates a combined transcript. The two conversation portions may be combined by any of the techniques described for operation 424 in FIG. 4. The combined conversation record is accessible to the user who requested it. The combined conversation record may remain "in the cloud" such as stored in the remote computing environment. However, it is also possible that the combined conversation record is provided to the audio capture device of the user.

At operation 614, the combined conversation record is used for purposes such as training an AI assistant for the user or generating derived content. The derived content, which could include a summary of the conversation, a transcript if the combined conversation record is in a different modality a to-do list, and the like, is provided to the user and may also be provided to the conversation participant. In some implementations, the conversation participant may condition providing access to his or her conversation portion upon receiving access to the derived content.

For ease of understanding, the processes discussed in this disclosure are delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entirety. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the processes 400, 500, and 600 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the processes 400, 500, and 600 may also be implemented in other ways. In addition, one or more of the operations of the processes 400, 500, and 600 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

### Illustrative Computing Architectures and Environments

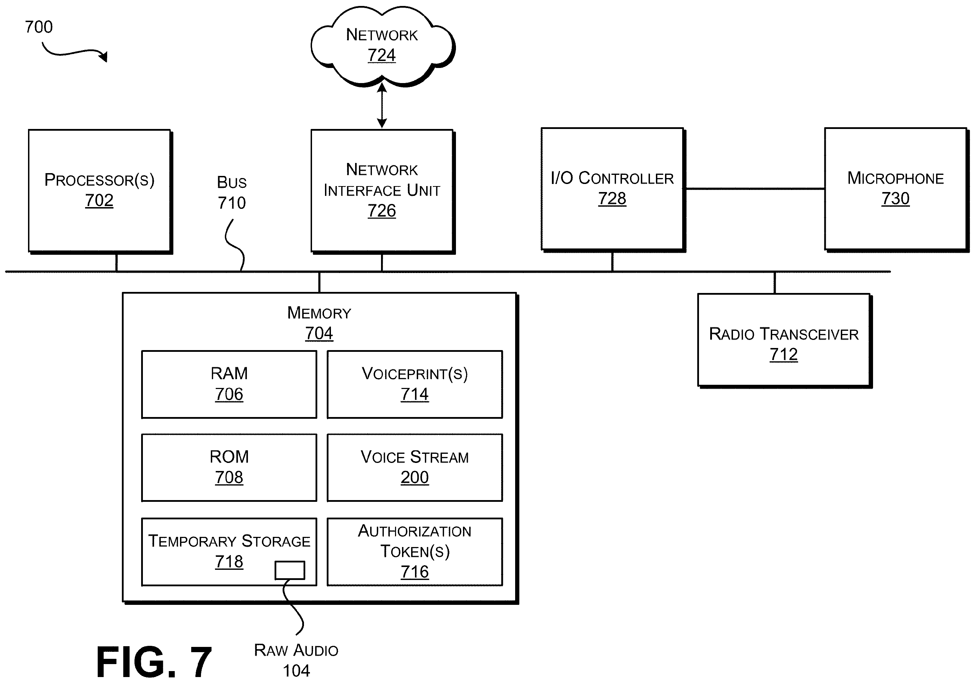

**FIG. 7** shows details of an example computer architecture 700 that may be used for implementing a computing device such as an audio capture device 102. The computer architecture 700 includes processor(s) 702, a memory 704, including a random-access memory 706 (RAM) and a read-only memory (ROM) 708, and a system bus 710 that couples the system memory 704 to the processor(s) 702. In various examples, the processor(s) 702 are distributed. Stated another way, one processor 702 may be located in a first location while another processor 702 is located in a second location separate from the first location. For example, a first processor 702 may be located in a smart phone while a second processor 702 is located in a wearable device. Moreover, the systems discussed herein can be provided as a distributed computing system such as two or more physically separate devices that are linked through wired or wireless communication pathways.

Processor(s) 702 can represent, for example, a CPU-type processing unit, a graphical processing units (GPU), a neural processing unit (NPU), a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like. Hardware logic components may be used to implement any of the processes or portions of the processes described herein.

The computer architecture 700 may in some implementations, particularly mobile implementations, include a radio transceiver 712. The radio transceiver 712 implements wireless communication using radio frequences. Example, short-range wireless protocols that may be used include Bluetooth, Bluetooth Low Energy (BLE), and near-field communication (NFC). Bluetooth protocol provides for wireless data exchange over distances of approximately 10 to 100 meters using frequency hopping spread spectrum transmission in the unlicensed 2.4 GHz ISM band. BLE operates in the same frequency spectrum but with a simplified protocol stack to achieve substantially reduced power consumption while maintaining similar communication range. NFC functions at 13.56 MHz with limited range of approximately 4 centimeters and enables contactless communication between compatible devices, particularly for secure transactions and device pairing operations.

The radio transceiver 712 may include an integrated circuit operatively coupled to at least one antenna structure (not shown) and includes both transmitting and receiving circuitry. In some implementations, the radio transceiver 712 includes a digital signal processor, radiofrequency front-end circuitry, and protocol-specific firmware to manage the physical and data link layers of wireless communication. The processor(s) 702 interfaces with the radio transceiver 712 via the bus 710, allowing application software and the operating system to access wireless communication functions through a standardized application programming interface.

A basic input/output system containing the basic routines that help to transfer information between elements within the computer architecture 700, such as during startup, is stored in the ROM 708. The memory 704 may also store an operating system, application(s), and other data described. One example type of application that may be stored in the memory 704 is a speech-to-text application for converting recorded audio of a voice into a transcript. The other data may include one or more voiceprint(s) 714. This may be the voiceprint 714 of a user associated with an audio capture device. The memory 704 may also include voiceprints of any authorized conversation participants. The voiceprint(s) 714 are used for speaker identification as described above. After diarization, any voice streams 200 that are not deleted may be moved out of the temporary storage 718 and saved in another portion of the memory 704. Authorization token(s) 716 granting access to the voice stream 200 of a conversation may also be stored in the memory 704. The memory 704 may also store together with or instead of one or more voice streams 200 a combined voice audio file.

The memory 704 may be connected to processor(s) 702 through a mass storage controller connected to the system bus 710. The memory 704 and its associated computer-readable media provide non-volatile storage for the computer architecture 700. Although the description of computer-readable media contained herein refers to a mass storage device, the computer-readable media can be any available computer-readable storage media or communication media that can be accessed by the computer architecture 700.

Computer-readable media includes both computer-readable storage media and communication media. Computer-readable storage media includes one or more of volatile memory, nonvolatile memory, and/or other persistent and/or auxiliary computer storage media, removable and non-removable computer storage media implemented in any method or technology for encoding of information such as computer-readable instructions, data structures, program modules, or other data. Thus, computer-readable storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

The memory may include temporary storage 718 is configured to store data only temporarily or transiently. Any data stored in the temporary storage 718 will be deleted or irrevocably rendered inaccessible after some period of time unless it is moved to a different storage location. The raw audio 104 captured from the environment is stored in the temporary storage. Voice streams created by processing the raw audio 104 may also be stored in the temporary storage initially. The voice stream identified as belonging to the user or that of an authorized conversation participant may be moved to a different storage location. In one implementation, the temporary storage is implemented as a rolling buffer that temporarily holds the raw audio 104, where new recordings continuously replace the oldest data, effectively deleting and rendering inaccessible any previously stored audio beyond the buffer's current scope. This mechanism may be implemented through various memory management approaches such as circular buffers, ring buffers, or FIFO queues with overwrite functionality.

In contrast to computer-readable storage media, communication media embodies computer-readable instructions, data structures, program modules, or other data in a modulated data signal, such as a carrier wave, or other transmission mechanism. Computer-readable storage media and communication media are mutually exclusive. Thus, as defined herein, computer-readable storage media does not include communication media. That is, computer-readable storage media does not include media consisting solely of a modulated data signal, a carrier wave, or a propagated signal, per se.

According to various configurations, the computer architecture 700 may operate in a networked environment using logical connections to remote computers through the network 720. The computer architecture 700 may connect to the network 720 through a network interface unit 722 connected to the system bus 710. The network connection may be wired or wireless. The computer architecture 700 also may include an input/output controller 724 for receiving and processing input from a number of other devices, including a keyboard, mouse, touch, or electronic stylus or pen. When implemented as an audio capture device 102, the computer architecture 700 will include a microphone 726 configured to capture audio from the surrounding environment. The microphone 726 and I/O controller 724 also include an analog to digital converter to convert sounds captured by the microphone 726 into digital signals. The input/output controller 724 may provide output to a display screen, a printer, or other type of output device.

The software components described herein may, when loaded into the processor(s) 702 and executed, transform the processor(s) 702 and the overall computer architecture 700 from a general-purpose computing system into a special-purpose computing system customized to facilitate the functionality presented herein. The processor(s) 702 may be constructed from any number of transistors or other discrete circuit elements, which may individually or collectively assume any number of states. More specifically, the processor(s) 702 may operate as a finite-state machine, in response to executable instructions contained within the software modules disclosed herein and encoded on the memory 704. These computer-executable instructions may transform the processor(s) 702 by specifying how the processor(s) transitions between states, thereby transforming the transistors or other discrete hardware elements constituting the processor(s) 702.

Example implementations of the computer architecture 700 as an audio capture device 102 include any type of device that is capable of recording audio such as, but not limited to a smart speaker, a handheld device such as a smart phone, a wearable device, a vehicle-system, an embedded system, an Internet of things (IoT) device, and a portable computer. Examples of handheld devices include smart phones. Examples of wearable devices include smart glasses, virtual reality headsets, headphones, earbuds, watches, and necklaces. Examples of IoT devices include Raspberry Pi, Jetson Nano, Nordic nRF5340, and Nordic nRF54H20.

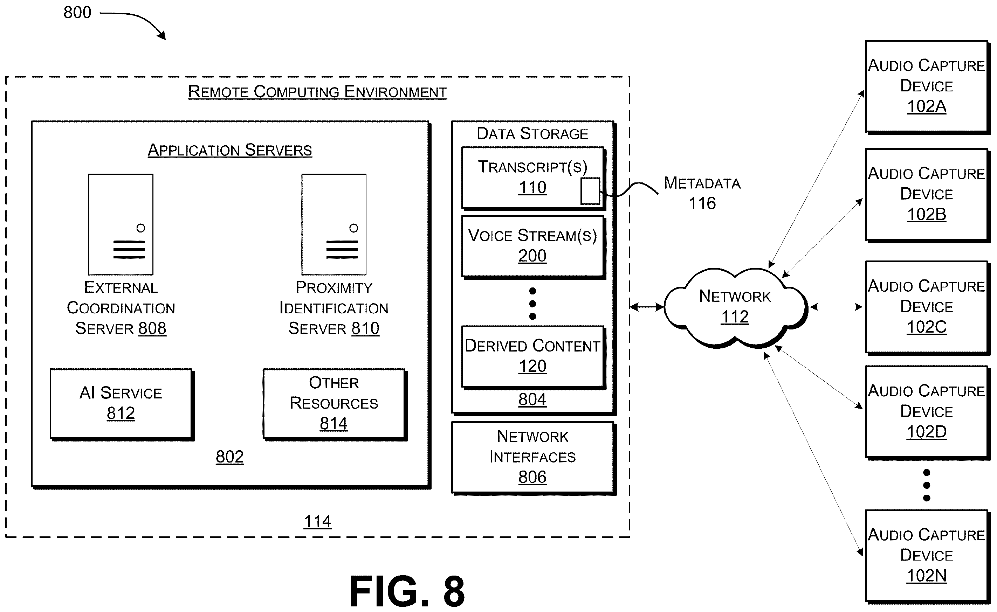

**FIG. 8** depicts an illustrative distributed computing environment 800 capable of executing the software components described herein. Thus, the distributed computing environment 800 illustrated in FIG. 8 can be utilized to execute any aspects of the software components presented herein. For example, the distributed computing environment 800 can be utilized to implement aspects of the remote computing environment 114.

Accordingly, the distributed computing environment 800 can include application servers 802 operating on, in communication with, or as part of the network 112. The network 112 can include various access networks. One or more audio capture devices 102A-102N can communicate with the remote computing environment 114 via the network 112. It should be understood that any number of audio capture devices 102 can communicate with the computing remote computing environment 114.

In various examples, the remote computing environment 114 includes application servers 802, data storage 804, and one or more network interfaces 806. The application servers 802 can include but are not limited to an external coordination server 808 and a proximity identification server 810. As shown in FIG. 8 the application servers 802 also can host an AI service 812 as well as other services, applications, portals, and/or other resources ("other resources") 814. The AI service 812 can implement an AI system including but not limited to the personal AI assistant 120 introduced FIG. 1.

The external coordination server 808 is used to coordinate sharing of data between accounts associated with different users. For example, if a conversation participant authorizes sharing a transcript 110, the external coordination server 808 will facilitate providing access to that transcript 110 and any associated metadata 116. The external coordination server 808 may also be configured to combine or interleave multiple transcripts 110 from a same conversation.

The proximity identification server 810 determines if two audio capture devices 102 are proximate to each other and may potentially be associated with users who are in conversation with one another. The proximity identification server 810 processes anonymized proximity data by managing the continuous broadcasting and logging of randomized cryptographic messages transmitted by audio capture devices 102 over short-range wireless technologies. These ephemeral identifiers change frequently to prevent unauthorized tracking while still enabling proximity detection.

When audio capture devices 102 detect potential proximity through these cryptographic exchanges, the proximity identification server 810 processes this information to determine if two devices are within a threshold distance and duration that would suggest their respective users are engaged in conversation. The proximity identification server 810 maintains device anonymity during this process, revealing no identifying information until explicit authorization is provided.

The proximity identification server 810 implements adaptive filtering algorithms to distinguish between devices belonging to conversation participants and those of uninvolved bystanders in crowded environments. These algorithms consider multiple parameters including physical distance thresholds (e.g., two meters), temporal proximity duration (e.g., one minute), pre-existing device connections, contact list relationships, and contextual factors such as overall device density in the vicinity. The proximity identification server 810 dynamically adjusts these filtering thresholds based on environmental conditions, allowing for detection of new conversation participants with no pre-existing connections when contextual indicators strongly suggest participation in the same conversation, while simultaneously reducing false positives in busy settings.

The proximity identification server 810 may use a proximity-based communication framework, such as Bluetooth Low Energy (BLE), Wi-Fi, or other short-range communication protocols, to enable audio capture devices to exchange anonymous, encrypted identifiers when in close proximity. Each audio capture device may generate a unique, ephemeral identifier that changes frequently, such as every 10-20 minutes. The identifiers may be broadcasted via the communication framework and can be received by nearby audio capture devices. The proximity identification server 810 may use a cryptographic protocol to generate and manage anonymous identifiers, such as a secret key that is used to derive the identifiers.

In some implementations, the proximity identification server 810 may use a decentralized approach to store and manage encounter history. Each audio capture device may maintain a local log of received identifiers and timestamps, and only share anonymous data with a central server when necessary. The proximity identification server 810 may facilitate matching between audio capture devices that have been in proximity, without revealing any sensitive information. The proximity identification server 810 may use end-to-end encryption to protect location data and ensure that only authorized parties can access this information.

The anonymous identifiers may be generated using a cryptographically secure hash function, such as SHA-256. The identifiers may be designed to be ephemeral, meaning they are only valid for a short period of time, and cannot be linked to a specific audio capture device or user. The proximity identification server 810 may use a timestamping mechanism to ensure that the identifiers are only valid for a specific period.

When two or more audio capture devices determine they have been in proximity, they may infer that their users were likely in a conversation. The proximity identification server 810 may use signal strength information, such as RSSI, to estimate the proximity between audio capture devices.

In some implementations, the proximity identification server 810 may use a combination of different communication frameworks and technologies, such as BLE, Wi-Fi, GPS, or acoustic signals, to determine proximity. The proximity identification server 810 may also use machine learning algorithms to improve the accuracy of proximity detection. The proximity identification server 810 may be designed to be flexible and adaptable to various use cases, such as conversation logging or social interaction analysis.

The proximity identification server 810 facilitates matching between audio capture devices that have been in proximity. The proximity identification server 810 may use a database to store anonymous identifiers and timestamps and may use a matching algorithm to determine which audio capture devices have been in proximity. The proximity identification server 810 may also use encryption and secure authentication protocols to protect user data.

In some implementations, the proximity identification server 810 may use a blockchain-based approach to store and manage encounter history. Each audio capture device may maintain a local copy of the blockchain and may use a consensus mechanism to ensure that the blockchain is updated consistently across all audio capture devices. The blockchain may be used to store anonymous identifiers and timestamps and may provide a secure and transparent way to manage encounter history.

The proximity identification server 810 may be designed to be secure and resistant to attacks. The use of anonymous identifiers, encryption, and secure authentication protocols may ensure that user privacy is protected while still enabling useful functionality.

As mentioned above, the remote computing environment 114 can include the data storage 804. According to various implementations, the functionality of the data storage 804 is provided by one or more databases operating on, or in communication with, the network 112. The functionality of the data storage 804 can also be provided by one or more servers configured to host data for the distributed computing environment 800. The data storage 804 can include, host, or provide one or more real or virtual datastores. The datastores are configured to host data used or created by the application servers 802 and/or other data. The data storage 804, may contain transcripts 110 including any associated metadata 116, voice streams 200, a combined voice audio file, and derived content 118. Although the voice streams 200 will typically be retained on the audio capture device 102 which recorded them, in some implementations the voice stream 200 of the user may be sent to the remote computing environment 114.

The remote computing environment 114 can communicate with, or be accessed by, the network interfaces 806. The network interfaces 806 can include various types of network hardware and software for supporting communications between two or more computing devices including the audio capture devices 102 and the application servers 802. It should be appreciated that the network interfaces 806 also may be utilized to connect to other types of networks and/or computer systems.

It should be understood that the distributed computing environment 800 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 800 provides the software functionality described herein as a service to the computing devices. It should be understood that the application servers 802 can include real or virtual machines including server computers, web servers, personal computers, and/or other devices. As such, various configurations of the concepts and technologies disclosed herein enable any device configured to access the distributed computing environment 800 to utilize the functionality described herein for providing the techniques disclosed herein, among other aspects.

### Illustrative Embodiments

The following clauses describe multiple possible embodiments for implementing the features described in this disclosure. The various embodiments described herein are not limiting nor is every feature of any given embodiment required to be present in another embodiment. Any two or more of the embodiments may be combined together unless context clearly indicates otherwise. As used herein in this document "or" means and/or. For example, "A or B" means A without B, B without A, or A and B. As used herein, "comprising" means including all listed features and potentially including addition of other features that are not listed. "Consisting essentially of' means including the listed features and those additional features that do not materially affect the basic and novel characteristics of the listed features. "Consisting of" means only the listed features to the exclusion of any feature not listed.

Clause 1. A method comprising: capturing, by an audio capture device (102), raw audio (104) from an environment containing a voice; diarizing the raw audio into separate voice streams (200) for each voice in the raw audio; identifying a voice stream of a user (106) of the audio capture device; discarding (410) the raw audio and voice streams of conversation participants other than the user; and generating a transcript (110) of speech of the user from the voice stream of the user.

Clause 2. The method of clause 1, wherein capturing the raw audio is performed as persistent audio monitoring and the method further comprises performing voice activity recognition on the raw audio to identify segments of the raw audio that contain human voices.

Clause 3. The method of clause 1 or 2, further comprising using the transcript to train a personal artificial intelligence (AI) assistant for the user.

Clause 4. The method of any of clauses 1 to 3, further comprising generating derived content from the transcript.

Clause 5. The method of clause 4, further comprising transmitting the transcript to a remote computing environment and wherein the derived content is generated on the remote computing environment.

Clause 6. The method of any of clauses 1 to 5, further comprising capturing metadata associated with the raw audio and associating the metadata with the transcript.

Clause 7. The method of any of clauses 1 to 6, further comprising: receiving an indication of an other device proximate to the audio capture device during capturing of the raw audio, the other device associated with the voice streams of a conversation participant other than the user; sending a request to the conversation participant requesting access to a voice stream of speech of the conversation participant created from the raw audio; combining the voice stream of the user and the voice stream of the conversation participant into a combined voice stream; and generating a combined transcript from the combined voice stream.

Clause 8. The method of any of clauses 1 to 6, further comprising: receiving an indication of an other device proximate to the audio capture device during capturing of the raw audio, the other device associated with the voice streams of a conversation participant other than the user; sending a request to the conversation participant requesting a transcript of speech of the conversation participant during capturing of the raw audio; obtaining access to the transcript of the speech of the conversation participant; and using the transcript of speech of the user and the transcript of speech of the conversation participant together.

Clause 9. A system comprising one or more processors and memory coupled to the processors containing instructions that, when executed, cause the system to perform the method of any of clauses 1 to 8.

Clause 10. Computer-readable storage media comprising instructions stored in a memory that when executed by a processor cause a computing device to perform acts comprising the method of any of clauses 1 to 8.

Clause 11. An audio capture device (102) comprising: a microphone (726); a processor (702); and a memory (704) storing instructions that, when executed by the processor, cause the audio capture device to perform acts comprising: temporarily storing raw audio (104) captured by the microphone from an environment during a conversation; diarizing the raw audio into separate voice streams (200) for each voice in the raw audio; identifying a voice stream of a user (106) of the audio capture device; discarding the raw audio; and generating a transcript (110) of speech of the user from the voice stream of the user.

Clause 12. The audio capture device of clause 11, wherein the memory comprises a temporary storage location that is periodically overwritten and temporarily storing the raw audio comprises storing the raw audio in the temporary storage location.

Clause 13. The audio capture device of clause 11 or 12, wherein the instructions cause the audio capture device to perform further acts comprising capturing metadata associated with the raw audio and associating the metadata with the transcript.

Clause 14. The audio capture device of any of clauses 11 to 13, further comprising a network connection and wherein the instructions cause the audio capture device to perform further acts comprising transmitting the transcript via the network connection to a remote computing device.

Clause 15. The audio capture device of any of clauses 11 to 14, wherein the instructions cause the audio capture device to perform further acts comprising: determining that a one of the separate voice streams contains the voice of an authorizing conversation participant that has authorized access to the authorizing conversation participant's voice stream; discarding the separate voice streams for other voices besides the user of the audio capture device and the authorizing conversation participant; and generating a multi-speaker transcript from the voice stream of the user and the voice stream of the authorizing conversation participant.

Clause 16. The audio capture device of clause 15, wherein determining that a one of the separate voice streams is the voice of an authorizing conversation participant comprises comparing a voiceprint of the authorizing conversation participant to the separate voice streams and identifying a match.

Clause 17. The audio capture device of clause 15 or 16, wherein the instructions cause the audio capture device to perform further acts comprising: receiving an authorization token from the authorizing conversation participant while the raw audio is captured; and wherein determining that the authorizing conversation participant has authorized access comprises determining existence of the authorization token on the audio capture device.

Clause 18. The audio capture device of any of clauses 11 to 17, further comprising a radio transceiver configured to communicate with an other device proximate to the audio capture device to identify a proximate relationship and wherein the instructions cause the audio capture device to perform further acts comprising reporting the proximate relationship to a proximity identification server.

Clause 19. An audio capture device (102) comprising: a means for recording audio (726); a means for processing (702); and a memory (704) storing instructions that, when executed by the processor, cause the audio capture device to perform acts comprising: temporarily storing raw audio (104) captured by the microphone from an environment during a conversation; diarizing the raw audio into separate voice streams (200) for each voice in the raw audio; identifying a voice stream of a user (106) of the audio capture device; discarding the raw audio; and generating a transcript (110) of speech of the user from the voice stream of the user.

Clause 20. Computer-readable storage media comprising instructions stored in a memory that when executed by a processor cause a computing device to perform acts comprising: receiving (602) a first conversation portion of a user from a first audio capture device associated with the first user; receiving (604) a second conversation portion of a conversation participant from a second audio capture device associated with the conversation participant; determining (606) that the first conversation portion and the second conversation portion are from a same conversation; determining (608) that the conversation participant has authorized sharing of the second conversation portion with the user; and combining (612) the first conversation portion and the second conversation portion to create a combined conversation record accessible by the user.

Clause 21. The computer readable storage media of clause 20, wherein the determining that the first conversation portion and the second conversation portion are from the same conversation is based on a first conversation indicia associated with the first conversation portion, a second conversation indicia associated with the second conversation portion.

Clause 22. The computer readable storage media of clause 20 or 21, wherein determining that the conversation participant has authorized sharing of the second conversation portion with the user comprises determining the existence of a preauthorization from the conversation participant authorizing sharing based upon at least one of a time or a location.

Clause 23. The computer readable storage media of clause 20 or 21 wherein determining that the conversation participant has authorized sharing of the second conversation portion with the user comprises: identifying to the user that the conversation participant participated in the same conversation; receiving a request from the user for permission to access the second conversation portion; sending a request to the conversation participant for access to the second conversation portion; and receiving a response from the conversation participant granting access to the second conversation portion.

Clause 24. The computer readable storage media of any of clauses 20 to 23, further comprising using the combined conversation record to train a personal artificial intelligence (AI) assistant for the user or to generate derived content.

Clause 25. A system comprising one or more processors and memory coupled to the processors configured to executed the instructions stored on the computer readable storage media of any of clauses 20 to 24.

Clause 26. A method implemented by executing by a computing device the instructions stored on the computer readable storage media of any of clauses 20 to 24.

This disclosure presents a technique for privacy preserving capture of audio or other modality from an environment during a conversation that only records the voice of a user of an audio capture device. Raw audio captured from the environment is diarized into separate voice streams for each voice. The voice stream of the user of the audio capture device is identified. The raw audio and voice streams of conversation participants other than the user are discarded. A transcript is generated from the voice stream of the user. The transcript may be used for training a personalized artificial intelligence (AI) assistant or generating derived content. If permission is granted, voice streams of other participants or transcripts of their portions of conversation may be used to provide fuller context.

### Conclusion

While certain example embodiments have been described, including the best mode known to the inventors for carrying out the invention, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the scope of the inventions disclosed herein. Skilled artisans will know how to employ such variations as appropriate, and the embodiments disclosed herein may be practiced otherwise than specifically described. The accompanying claims and their equivalents are intended to cover such forms or modifications as would fall within the scope of the inventions disclosed herein.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context. The terms "portion," "part," or similar referents are to be construed as meaning at least a portion or part of the whole including up to the entire noun referenced.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element (e.g., two different models).

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method comprising:
capturing, by an audio capture device (102), raw audio (104) from an environment containing a voice;
diarizing the raw audio into separate voice streams (200) for each voice in the raw audio;
identifying a voice stream of a user (106) of the audio capture device;
discarding (410) the raw audio and voice streams of conversation participants other than the user; and
generating a transcript (110) of speech of the user from the voice stream of the user.

2. The method of claim 1, wherein capturing the raw audio is performed as persistent audio monitoring and the method further comprises performing voice activity recognition on the raw audio to identify segments of the raw audio that contain human voices.

3. The method of claim 1 or 2, further comprising using the transcript to train a personal artificial intelligence, AI, assistant for the user.

4. The method of any preceding claim, further comprising generating derived content from the transcript.

5. The method of claim 4, further comprising transmitting the transcript to a remote computing environment and wherein the derived content is generated on the remote computing environment.

6. The method of any preceding claim, further comprising capturing metadata associated with the raw audio and associating the metadata with the transcript.

7. The method of any preceding claim, further comprising:
receiving an indication of an other device proximate to the audio capture device during capturing of the raw audio, the other device associated with the voice streams of a conversation participant other than the user;
sending a request to the conversation participant requesting access to a voice stream of speech of the conversation participant created from the raw audio;
combining the voice stream of the user and the voice stream of the conversation participant into a combined voice stream; and
generating a combined transcript from the combined voice stream.

8. An audio capture device (102) comprising:
a microphone (726);
a processor (702); and
a memory (704) storing instructions that, when executed by the processor, cause the audio capture device to perform acts comprising:
temporarily storing raw audio (104) captured by the microphone from an environment during a conversation;
diarizing the raw audio into separate voice streams (200) for each voice in the raw audio;
identifying a voice stream of a user (106) of the audio capture device;
discarding the raw audio; and
generating a transcript (110) of speech of the user from the voice stream of the user.

9. The audio capture device of claim 8, wherein the memory comprises a temporary storage location that is periodically overwritten and temporarily storing the raw audio comprises storing the raw audio in the temporary storage location.

10. The audio capture device of claim 8 or 9, wherein the instructions cause the audio capture device to perform further acts comprising capturing metadata associated with the raw audio and associating the metadata with the transcript.

11. The audio capture device of any of claims 8 to 10, further comprising a network connection and wherein the instructions cause the audio capture device to perform further acts comprising transmitting the transcript via the network connection to a remote computing device.

12. The audio capture device of any of claims 8 to 11, wherein the instructions cause the audio capture device to perform further acts comprising:
determining that a one of the separate voice streams contains the voice of an authorizing conversation participant that has authorized access to the authorizing conversation participant's voice stream;
discarding the separate voice streams for other voices besides the user of the audio capture device and the authorizing conversation participant; and
generating a multi-speaker transcript from the voice stream of the user and the voice stream of the authorizing conversation participant.

13. The audio capture device of claim 12, wherein determining that a one of the separate voice streams is the voice of an authorizing conversation participant comprises comparing a voiceprint of the authorizing conversation participant to the separate voice streams and identifying a match.

14. The audio capture device of claim 12, wherein the instructions cause the audio capture device to perform further acts comprising:
receiving an authorization token from the authorizing conversation participant while the raw audio is captured; and
wherein determining that the authorizing conversation participant has authorized access comprises determining existence of the authorization token on the audio capture device.

15. Computer-readable storage media comprising instructions stored in a memory that when executed by a processor cause a computing device to perform acts comprising:
receiving (602) a first conversation portion of a user from a first audio capture device associated with the first user;
receiving (604) a second conversation portion of a conversation participant from a second audio capture device associated with the conversation participant;
determining (606) that the first conversation portion and the second conversation portion are from a same conversation;
determining (608) that the conversation participant has authorized sharing of the second conversation portion with the user; and
combining (612) the first conversation portion and the second conversation portion to create a combined conversation record accessible by the user.
